# EUROPÄISCHE PATENTSCHRIFT

(11) **EP 2 841 326 B1**
(45) Veröffentlichungstag und Bekanntmachung des Hinweises auf die Patenterteilung: **15.06.2016**
(21) Anmeldenummer: 13711593.7
(22) Anmeldetag: 11.03.2013
(51) Int. Cl.: B62D 25/20, B60R 13/08

(54) **ABSCHIRMELEMENT FÜR WÄRME UND SCHALL**
HEAT AND NOISE INSULATION ELEMENT
ELEMENT D'ISOLATION THERMIQUE ET SONORE

(30) Priorität: 23.04.2012 DE 102012206617
(43) Veröffentlichungstag der Anmeldung: 04.03.2015
(73) Patentinhaber: Federal-Mogul Sealing Systems Gmbh, 57562 Herdorf (DE)
(72) Erfinder: KRUS, Ralf, 51789 Lindlar (DE)
(74) Vertreter: Becker Kurig Straus
(86) Internationale Anmeldenummer: PCT/EP2013/054866
(87) Internationale Veröffentlichungsnummer: WO 2013/159978

(56) Entgegenhaltungen:
- EP-A1- 0 244 755
- EP-A1- 0 246 464
- EP-A1- 0 643 203
- EP-A1- 1 491 327
- DE-A1-102007 058 895
- DE-B3- 10 345 575
- US-A1- 2008 096 451

## Beschreibung

Die vorliegende Erfindung betrifft im Allgemeinen ein Abschirmelement wie ein Wärmeabschirmblech oder ein Schallabschirmelement, welches eine Trägerlage beinhaltet, wie es typischerweise in der Nähe eines Verbrennungsmotors oder in einem Kraftfahrzeug, einem Stromgenerator oder einem Blockheizkraftwerk Verwendung findet.

Aus dem Stand der Technik sind viele verschiedene Möglichkeiten bekannt, ein Abschirmblech auszuführen.

Eine Möglichkeit, ein schalldämpfendes Abschirmelement für ein Fahrzeug herzustellen, ist beispielsweise in der WO 01/14169 offenbart.

Aus der Offenlegungsschrift DE 10 2010 024 733 ist ein Flächenbauteil bekannt, das als Streckgitter ausgeführt ist und mit dem ein Schalldämmungseffekt erzielt werden kann.

Ein weiteres akustisches Hitzeschild, welches als Verbundteil zur akustischen und thermischen Abschirmung ausgebildet ist, ist in DE 10 2007 058895 offenbart.

Es besteht Bedarf nach einer einfachen Möglichkeit, die Trägerlage an dem Gitter zu befestigen.

Es besteht Bedarf danach, die akustischen Eigenschaften eines Abschirmelements einfach an eine gegebene Schallquelle anzupassen.

Es besteht Bedarf nach einer einfachen und kostengünstigen Möglichkeit, ein Abschirmelement wie ein Schall/Wärmeabschirmblech herzustellen oder zu verbessern.

Die Aufgabe wird gelöst durch ein Abschirmelement gemäß Anspruch 1.

Gemäß einem weiteren Aspekt der vorliegenden Erfindung wird ein Abschirmelement, insbesondere Akustik- und oder Wärmeabschirmblech, bereitgestellt. Das Abschirmelement umfasst eine Trägerlage, die mit einem Gitter verbunden ist, wobei mindestens in einem Bereich Stege des Gitters flachgepresst bzw. verpresst sind, wodurch die Größe von Gitteröffnungen verringert ist, die an die flachgepressten Stege angrenzen.

Durch das Flachpressen des Gitters in definierten Bereichen wird die Größe der Öffnungen verkleinert, während die Dicke des Gitters verringert wird. Somit lässt sich einfach durch Flachpressen bestimmter Gitterbereiche oder des gesamten Gitters die Größe der durch die Stege begrenzten Gitteröffnungen verändern. Je nach dem wie stark das Gitter flachgepresst wird, verkleinern sich die Öffnungen entsprechend. Somit sind anstelle von herkömmlichen mehreren Stanz- oder Gitterherstellungswerkzeugen lediglich eine Presse oder Walze notwendig, um die Größe der Öffnungen des Gitters bestimmen zu können.

Es ist ebenfalls vorgesehen, dass die Gitter nur stellenweise oder mit einer Struktur verpresst werden, um die Größe der Öffnungen nur in bestimmten Bereichen zu beeinflussen.

Gemäß einem weiteren Aspekt der vorliegenden Erfindung ist die Trägerlage mit mindestens einem Noppen und/oder mit einer Noppenstruktur versehen. Durch die Noppung kann erreicht werden, dass ein definierter Abstand zwischen der Trägerlage und dem Gitter besteht. Eine Noppenstruktur trägt weithin dazu bei. die Trägerlage stabiler zu versteifen. Eine Noppenstruktur kann zudem das Schall- und Wärmeabstrahlungsverhalten von der Trägerlage beeinflussen.

Gemäß einem weiteren Aspekt der vorliegenden Erfindung sind Trägerlage und das Gitter in mindestens einem Bereich voneinander beabstandet, sodass mindestens ein Hohlraum gebildet ist der von der Trägerlage und dem Gitter begrenzt wird. Aus einem definierten Hohlraum und definierten Öffnungen kann in dem Hohlraum des Abschirmelementes ein auf eine Frequenz bzw. auf einen Frequenzbereich abgestimmter Resonator gebildet werden, der einen entsprechenden Schall besonders gut dämpfen oder reflektieren kann.

Gemäß einem weiteren Aspekt der vorliegenden Erfindung ist das Gitter ein Drahtgitter, ein Stanzgitter oder ein Gitter aus Streckmetall. Ein gewobenes oder Drahtgitter kann relativ einfach zusammengepresst werden, da der Draht üblicherweise einen runden Querschnitt aufweist, was das Flachpressen besonders einfach macht. Ein Stanzgitter kann je nach gewähltem Material ebenfalls relativ einfach flachgepresst werden. Ein Stanzgitter kann besonders gut mit runden Öffnungen hergestellt werden, deren Minimaldurchmesser sehr einfach dadurch bestimmt werden kann, wie flach das Stanzgitter verpresst wird. Ein Gitter aus Streckmetall kann in einem ersten Verfahrensschritt durch Pressen oder Walzen eingeebnet werden, wodurch sich je nach aufgebrachtem Zug das Gitter in Streckrichtung weiter streckt oder staucht. Ein Gitter aus Streckmetall eröffnet die Möglichkeiten, die Größe von Öffnungen in zwei Stufen zu beeinflussen, erst durch ein Einebnen des Streckmetalls und in einem zweiten Schritt durch ein weiteres Flach- und Breitpressen der Stege des Streckmetalls. Sowohl das Gitter als auch die Trägerlage ist in diesen Ausführungsformen nicht auf ein Material beschränkt, und kann aus Aluminium, Stahl oder Edelstahl gefertigt sein.

Gemäß einem weiteren Aspekt der vorliegenden Erfindung ist das Gitter am Rand der Trägerlage umbördelt. Eine randseitige Umbördelung gestattet es, die Trägerlage einfach mit dem Gitter zu verbinden.

Erfindungsgemäß wird ein Abschirmelement, insbesondere Akustik- und oder Wärmeabschirmblech wie es beispielsweise aus Verbrennungsmotoranwendungen im Fahrzeugbereich, Stromerzeugerbereich oder aus Blockheizkraftwerken bekannt ist, bereitgestellt. Das Abschirmelement umfasst dabei eine Trägerlage sowie ein Gitter, wobei die Trägerlage mit dem Gitter verbunden ist. Der Querschnitt der Stege des Gitters verjüngt sich mindestens in einem Bereich in einer Richtung, die von der Trägerlage abgewandt ist. Die Trägerlage bzw. das Material der Trägerlage weist eine geringere Festigkeit auf als das Gitter bzw. das Material des Gitters. Die Trägerlage ist zumindest teilweise mit dem Gitter verpresst, sodass sich die Trägerlage bis in den sich verjüngenden Bereich erstreckt, und so die Trägerlage mit dem Gitter formschlüssig verbunden ist.

Durch den sich verjüngenden Querschnitt der Stege des Gitters kann das weichere Material der Trägerlage in das Gitter und hinter die Bereiche der Stege des Gitters gepresst werden, die sich verjüngen. Damit ergibt sich ein verformter Teil der Trägerlage, der die Stege zumindest teilweise umgreift und so das Gitter bzw. die Stege des Gitters formschlüssig hält. Das Verpressen ist nur möglich, da das Gitter aus einem Material mit einer höheren Festigkeit als dem Material der Trägerlage besteht, da sonst die Trägerlage beim Verpressen lediglich das Gitter flachdrücken würde.

In einer weiteren beispielhaften Ausführungsform umfasst das Abschirmelement ein zweites Gitter. Ein Querschnitt der Stege des zweiten Gitters verjüngt sich mindestens in einem Bereich und in einer Richtung, die von der Trägerlage abgewandt ist. Auch hier weist das zweite Gitter eine höhere Festigkeit auf, als die Trägerlage. Die Trägerlage ist ebenfalls zumindest teilweise mit dem zweiten Gitter verpresst, sodass sich die Trägerlage bis in den sich verjüngenden Bereich erstreckt, und so die Trägerlage mit dem Gitter for-mschlüssig verbindet.

In dieser Ausführungsform ist eine Trägerlage auf beiden Seiten jeweils mit einem Gitter verpresst, sodass sich mindestens ein dreischichtiger Aufbau ergibt, wobei die Gitter die äußeren Schichten bilden.

In einer anderen beispielhaften Ausführungsform umfasst das Abschirmelement weiter eine zweite Trägerlage und ein zweites Gitter. Die zweite Trägerlage ist dabei mit der Trägerlage verbunden. Die zweite Trägerlage ist zumindest teilweise mit dem zweiten Gitter verpresst, sodass sich die Trägerlage bis in den sich verjüngenden Bereich erstreckt, und so die Trägerlage mit dem Gitter formschlüssig verbindet

Diese Ausführungsform entspricht dabei einem doppelten Abschirmelement, das aus zwei miteinander über die jeweiligen Trägerlagen verbundenen Abschirmelementen aufgebaut ist. Die beiden Trägerlagen können durch Clinchen miteinander verbunden sein. Die beiden Trägerlagen können auch miteinander vernietet sein. Die beiden Trägerlagen können miteinander verschweißt sein.

In einer weiteren beispielhaften Ausführungsform umfasst das Abschirmelement mindestens einen Verpressungsbegrenzer, der jeweils an den Stellen zwischen der Trägerlage und der zweiten Trägerlage angeordnet ist, an dem die Trägerlage zumindest teilweise mit dem Gitter verpresst ist, und die zweite Trägerlage zumindest teilweise mit dem zweiten Gitter verpresst ist.

Durch den Verpressungsbegrenzer kann die Gesamthöhe der Trägerlage erhöht werden, wodurch das Gitter bzw. das zweite Gitter beim Verpressen weniger stark verformt werden müssen.

In einer zusätzlichen beispielhaften Ausführungsform sind das Gitter und/oder das zweite Gitter als ein Drahtgitter ausgeführt.

In einer weiteren zusätzlichen beispielhaften Ausführungsform sind das Gitter und/oder das zweite als ein Stanzgitter ausgeführt. Gerade bei Stanzgittern kann es notwendig sein, die Löcher des Gitters nachträglich so zu verformen, dass sie sich zumindest in einer Richtung im Querschnitt verjüngen. Durch das nachträgliche Verformen können die Stege des Gitters von einer im allgemeinen rechteckigen Form in eine Trapezfonn oder in eine sechseckige Form umgeformt werden, um den Formschluss zwischen der Trägerlage und dem Gitter zu ermöglichen.

In einer anderen beispielhaften Ausführungsform weisen die Stege des Gitters einen runden, trapezförmigen, fünf- oder sechseckigen Querschnitt auf. Durch diese Formen kann sichergestellt werden, dass sich der Querschnitt immer in einer Richtung verjüngt. Die Seite des Gitters, in der sich der Querschnitt der Stege verjüngt wird dann von der Trägerlage wegweisend verwendet.

In einer anderen zusätzlichen beispielhaften Ausführungsform des Abschirmelements ist die Trägerlage mit Noppen oder einer Noppenstruktur versehen. Die Noppenstruktur kann nach innen oder nach außen weisen. Die Noppenstruktur kann dazu dienen, die Trägerlage zu versteifen. Die Noppenstruktur kann dazu dienen, die Abstrahlung von akustischer Energie zu verringern.

Weiter kann in einer beispielhaften Ausführungsform die Trägerlage mit dem Gitter im Bereich der Noppen verpresst sein. Dies bietet sich insbesondere dann an, wenn die Noppen in Richtung des Gitters ausgeführt sind. In dieser Ausführungsform können die Noppen zusätzlich als Abstandshalter zwischen der Trägerlage und dem Gitter dienen, um so einen definierten Hohlraum zwischen der Trägerlage und dem Gitter zu erhalten.

In einer weiteren beispielhaften Ausführungsform umfasst das Abschirmelement weiter mindestens eine Zwischenlage. Die Zwischenlage kann jeweils zwischen dem Gitter und der Trägerlage bzw. zwischen der Trägerlage und dem zweiten Gitter und/oder zwischen jeweils der Trägerlage und dem Gitter und der zweiten Trägerlage und dem zweiten Gitter angeordnet ist. Die Zwischenlage ist in den Bereichen ausgespart, in denen das Gitter und/oder das zweite Gitter mit der Trägerlage verpresst ist, und/oder in denen das zweite Gitter mit der zweiten Trägerlage verpresst ist. Diese Ausführungsform soll alle Ausführungen mit mindestens einer Zwischenlage, die zwischen einer Trägerlage und einem Gitter angeordnet ist abdecken.

In einer zusätzlichen beispielhaften Ausführungsform des Abschirmelements ist die erste Trägerlage an mindestens einem Rand um das erste Gitter herum gebördelt und/oder die zweite Trägerlage ist an mindestens einem Rand um das zweite Gitter gebördelt.

In einer weiteren anderen beispielhaften Ausführungsform des Abschirmelements umfasst die die Trägerlage und/oder die zweite Trägerlage Aluminium bzw. eine Aluminiumlegierung oder einen weichen Edelstahl. Die Trägerlage kann ebenfalls aus Stahlblech ausgeführt sein, auf das Verpressungselemente aus Aluminium bzw. einer Aluminiumlegierung aufgebracht sind. Die Verpressungselemente können beispielsweise durch Reibschweißen auf das Stahlblech aufgebracht werden.

In einer zusätzlichen beispielhaften Ausführungsform des Abschirmelements umfassen das Gitter und/oder das zweite Gitter vergüteten, kaltverfestigten oder hochfesten Stahl bzw. Edelstahl.

Eine Kombination einer Trägerlage aus weichem Edelstahl und einem Gitter aus vergütetem oder hochfesten Edelstahl gestattet es ebenfalls, die Trägerlage in und teilweise um die Stege des Gitters zu pressen und so eine formschlüssige Verbindung zwischen dem Gitter und der Trägerlage zu erreichen.

In einer anderen weiteren beispielhaften Ausführungsform des Abschirmelements ist die Trägerlage mit einem Höhenprofil versehen. Durch das Höhenprofil kann die Trägerlage an den Stellen dünner ausgeführt werden, an denen die Trägerlage nicht mit einem Gitter verpresst wird. Durch Prägen oder Ziehen kann ein derartiges Höhenprofil erzielt werden.

In einer weiteren beispielhaften Ausführungsform des Abschirmelements sind mindestens in einem Bereich Stege des Gitters flachgepresst, wodurch die Größe der an dem Steg angrenzenden Gitteröffnungen verringert ist. Durch ein Flachpressen werden die Stege verbreitert, wodurch der verbleibenden Platz für die Öffnungen verringert wird, wodurch insgesamt die Öffnungen des Gitters verkleinert werden. Dieser Schritt sollte in der Kombinierten Ausführungsform vor dem Verpressen der Trägerlage mit dem Gitter stattfinden. Zusätzlich sollte die Stege des Gitters nur in den Bereichen flachgepresst werden, di nicht mit der Trägerlage verpresst werden sollen, da die Hinterschneidungen die einen Formschluss zwischen der Trägerlage und dem Gitter ermöglichen durch das Flachpressen ebenfalls verringert werden.

In einer beispielhaften weiteren Ausführungsform des Abschirmelements ist die Trägerlage mindestens in einem Bereich von dem Gitter beabstandet, sodass zwischen dem Gitter und der Trägerlage ein Hohlraum definiert ist, der von der Trägerlage und dem Gitter begrenzt wird. In dieser Ausführungsform kann der Hohlraum durch seine Größe und durch die und definierten Öffnungen bzw. die in die Trägerlage eingeprägten Strukturen auf eine Frequenz bzw. auf einen Frequenzbereich abgestimmt werden, die bzw. der besonders gut durch das Abschirmelement abgeschirmt wird. Es ist ebenfalls vorgesehen das Gitter an unterschiedlichen Stellen unterschiedlich stark flachzusrücken, um das Abschirmelement auf ein besonders breitbandiges Absorptionsverhalten abzustimmen.

### Beschreibung der Figuren.

Figuren 1 bis 4 stellen Teilansichten eines Drahtgitters und einer Flachpressung des Gitters mit einer Trägerlage dar.
Figuren 5 bis 8 stellen Teilansichten eines Drahtgitters und einer Verpressung des Gitters mit einer Trägerlage dar.
Figuren 9 bis 12 zeigen Teilansichten eines Stanzgitters und einer Verpressung des Gitters mit einer Trägerlage.
Figur 13 stellt eine Teilansicht eines teilweise flachgepressten Stanzgitters und einer Verpressung des Gitters mit einer Trägerlage dar.
Figuren 14 bis 19 stellen Schnittansichten durch verschiedene Ausführungsformen eines erfindungsgemäßen Abschirmelements dar, das als Akustik- und Wärmeabschirmblech ausgeführt ist.

Sowohl in der Beschreibung, als auch in den Figuren werden gleiche oder ähnliche Bezugszeichen verwendet, um gleiche oder ähnliche Elemente zu bezeichnen. Die Figuren sind schematisch dargestellt, um die wesentlichen Aspekte der Erfindung klarer darstellen zu können.

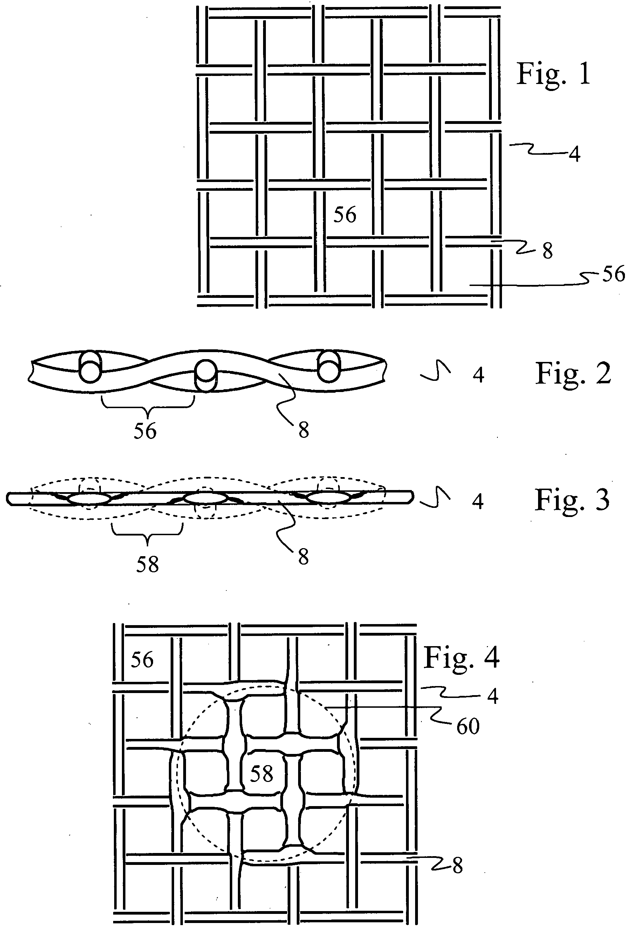

Figur 1 zeigt eine Aufsicht auf ein Drahtgitter 4 aus Edelstahl wobei die Stege 8 durch einzelne miteinander verwobene Runddrähte gebildet werden die Stege umgeben dabei Gitteröffnungen 56. Das Drahtgitter ist aus Runddraht gefertigt.

Figur 2 zeigt eine Schnittansicht durch das Drahtgitter 4 von Figur 1, wobei der Verlauf der Drähte bzw. Stege 8 des Gitters 4 aus Edelstahl klar erkennbar ist.

Figur 3 zeigt die Schnittansicht des Drahtgitter 4 von Figur 2, wobei das Drahtgitter auf der gesamten Breite flachgepresst, bzw. flachgedrückt wurde. Zur Verdeutlichung ist der ursprüngliche Verlauf der Drähte bzw. Stege 8 des Gitters 4 gestrichelt dargestellt. Das Gitter wurde auf eine Dicke flachgepresst, die kleiner ist als der ursprüngliche Durchmesser der Drähte bzw. Stege 8. Die flachgepressten Stege 8 sind durch das Flachpressen breiter geworden, wodurch die Gitteröffnungen 58 zwischen den flachgepressten Stegen 8 kleiner sind als die Gitteröffnungen 56 des ursprünglichen Gitters.

Figur 4 zeigt eine Aufsicht auf ein Drahtgitter 4 aus Edelstahl wobei das Drahtgitter 4 nur im Bereich 60 flachgepresst, bzw. flachgedrückt ist. In einem nicht flachgepressten Bereich bilden miteinander verwobenen Runddrähte die Stege 8, und die Gitteröffnungen 56 weisen noch die ursprüngliche Größe auf. In dem Bereich 60 ist das Gitter 4 bis auf eine Dicke flachgepresst die kleiner ist als der ursprüngliche Durchmesser der Drähte bzw. Stege 8. In dieser Ansicht ist klar, dass durch das Flachpressen des Gitters 4 die Größe der Gitteröffnungen 58 nach dem Flachpressen abgenommen hat. Es ist aus der Figur ebenfalls klar, dass je nach der Enddicke, auf die das Gitter 4 flachgepresst wird, die Größe der Gitteröffnungen 58 nach dem Flachpressen gewählt werden kann.

Anstelle von runden Flachgepressten Bereich 60 ist es ebenfalls möglich das gesamte Gitter 4 (beispielsweise bis auf einige Bereiche) flachzupressen. Es ist auch möglich das Gitter nur entlang von Streifen oder in jeder beliebigen Form flachzupressen oder flachzuwalzen.

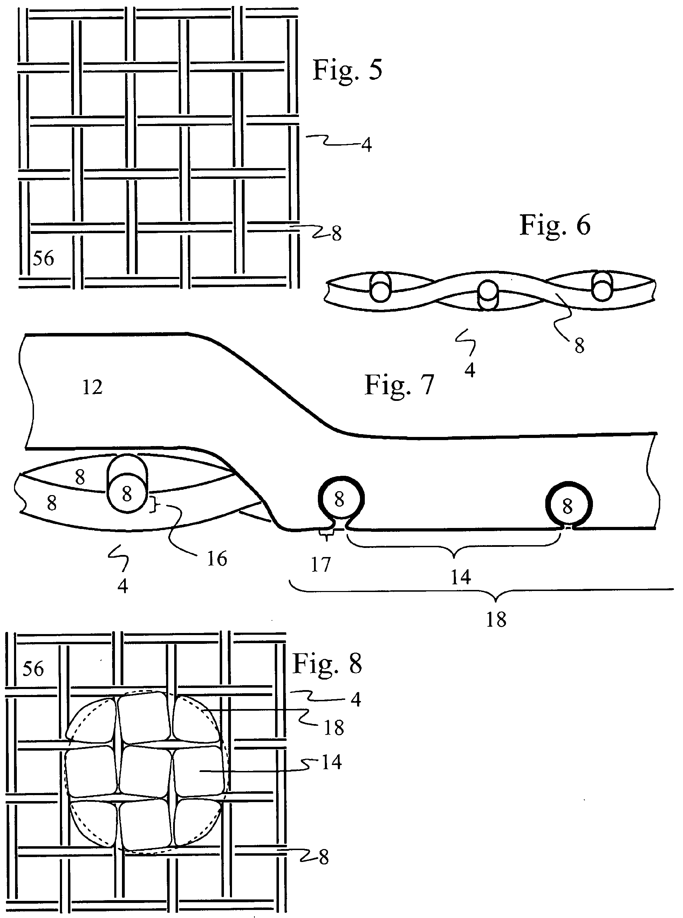

Figur 5 entspricht der Figur 1 und zeigt eine Aufsicht auf ein Drahtgitter 4 aus Edelstahl wobei die Stege 8 durch einzelne miteinander verwobene Runddrähte gebildet werden.

Figur 6 entspricht der Figur 1 und zeigt eine Schnittansicht durch das Drahtgitter 4 von Figur 6, wobei der Verlauf der Drähte bzw. Stege 8 des Gitters 4 aus Edelstahl klar erkennbar ist.

Figur 7 zeigt eine vergrößerte Schnittansicht des Drahtgitters 4 von Figur 6 wobei eine Trägerlage 12 teilweise mit dem Drahtgitter 4 verpresst ist. Auf der linken Seite sind das Drahtgitter und die Trägerlage nicht miteinander verbunden.

Das Bezugszeichen 16 zeigt den Bereich, in dem der Querschnitt des Drahts bzw. der Stege 8 sich aus Sicht der Trägerlage 12 verjüngt. Der Bereich 18 zeigt den Bereich, in dem die Trägerlage 12 mit dem Gitter 4 verpresst ist. Im Bereich 14 ist das Material der Trägerlage 12 in die Öffnungen des Gitters eingedrungen. Der mit dem Bezugszeichen 17 gekennzeichnete Teil verdeutlicht den Teil der Trägerlage 12, der hinter die sich verjüngenden Teile der Stege 8 des Gitters 4 gepresst wurde und somit eine formschlüssige Verbindung zwischen dem Material der Trägerlage 12 und dem Gitter bereitstellt.

In der Figur 7 wurde ebenfalls dargestellt, dass die Stege 8 des Gitters 4 beim Verpressen ebenfalls verformt werden, wodurch das gesamte Drahtgitter leicht eingeebnet wird.

Figur 8 stellt eine Aufsicht auf einen Teilbereich des Abschirmelements dar, bei dem die Trägerlage 12 mit dem Drahtgitter 4 verpresst ist. Die Trägerlage 12 wurde im Bereich 18 durch einen runden Stempel mit dem Gitter 4 verpresst. Im Bereich 14 ist das Material der Trägerlage 12 in die Öffnungen des Gitters eingedrungen und umgibt die Stege 8 zumindest teilweise formschlüssig. Im Gegensatz zu anderen Verbindungstechniken ist es lediglich notwendig, die Trägerlage 12 partiell in das Gitter 4 einzupressen, um eine formschlüssig Verbindung zu erhalten.

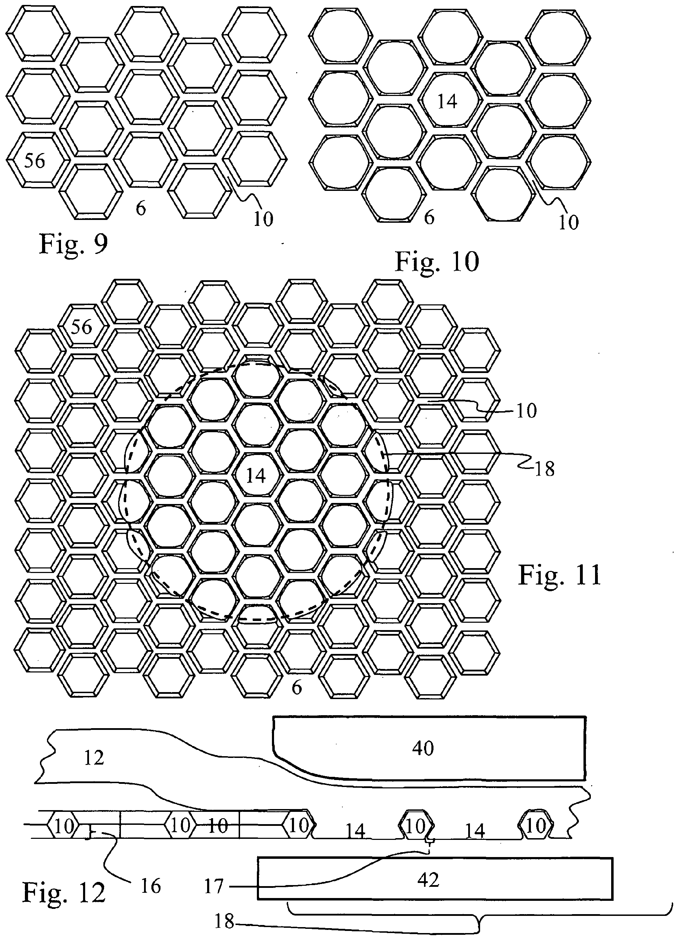

Figur 9 zeigt eine Aufsicht auf ein Stanzgitter 6 aus Edelstahl, wobei die Stege 10, die die sechseckigen Öffnungen begrenzen, ebenfalls im Querschnitt sechseckig ausgeführt sind.

Figur 10 zeigt eine Aufsicht auf ein Stanzgitter 6 von Figur 9, wobei analog zu der Figur 7 eine Trägerlage mit dem Stanzgitter 6 verpresst ist. Das Material ist dabei durch die Öffnungen des Gitters 6 hindurchgetreten und umgibt die Stege 10 des Stanzgitters 6 formschlüssig.

Figur 11 stellt eine Aufsicht auf einen Teilbereich des Abschirmelements dar, bei dem die Trägerlage mit dem Stanzgitter 6 verpresst ist. Analog zu Figur 7 wurde die Trägerlage im Bereich 18 durch einen runden Stempel mit dem Gitter 6 verpresst. Im Bereich 14 ist das Material der Trägerlage in die Öffnungen des Gitters 6 eingedrungen und umgibt die Stege 10 zumindest teilweise formschlüssig. Die formschlüssige Verbindung ist daran zu erkennen, dass der innere Rand der Öffnungen nicht mehr zu erkennen ist. Auch hier genügt es, lediglich die Trägerlage 12 partiell in das Gitter 4 einzupressen, um eine formschlüssige Verbindung zu erzielen.

Figur 12 zeigt eine vergrößerte Schnittansicht des Drahtgitters 6 von Figur 11, wobei die Trägerlage 12 teilweise mit dem Drahtgitter 6 verpresst ist. Auf der linken Seite ist das Drahtgitter 6 nicht mit der Trägerlage 12 verbunden.

Auch hier zeigt das Bezugszeichen 16 den Bereich des Querschnitts des Drahts bzw. der Stege 8, der sich aus Sicht der Trägerlage 12 verjüngt. Der Bereich 18 zeigt den Bereich, in dem die Trägerlage 12 durch den Stempel 40 in das Stanzgitter 6 gegen ein Gegenstück 42 verpresst wurde. Im Bereich 14 ist das Material der Trägerlage 12 in die Öffnungen des Gitters eingedrungen. Der mit dem Bezugszeichen 17 gekennzeichnete Teil verdeutlicht den Teil der Trägerlage 12, der hinter die, sich verjüngenden Teile der Stege 10 des Stanzgitters 6 gepresst wurde. Der mit dem Bezugszeichen 17 gekennzeichnete Teil stellt somit die formschlüssige Verbindung zwischen dem Material der Trägerlage 12 und dem Stanzgitter 6 dar.

Bein einem Stanzgitter treten keine Verformungen des Gitters in Richtung der Verpressungsrichtung auf.

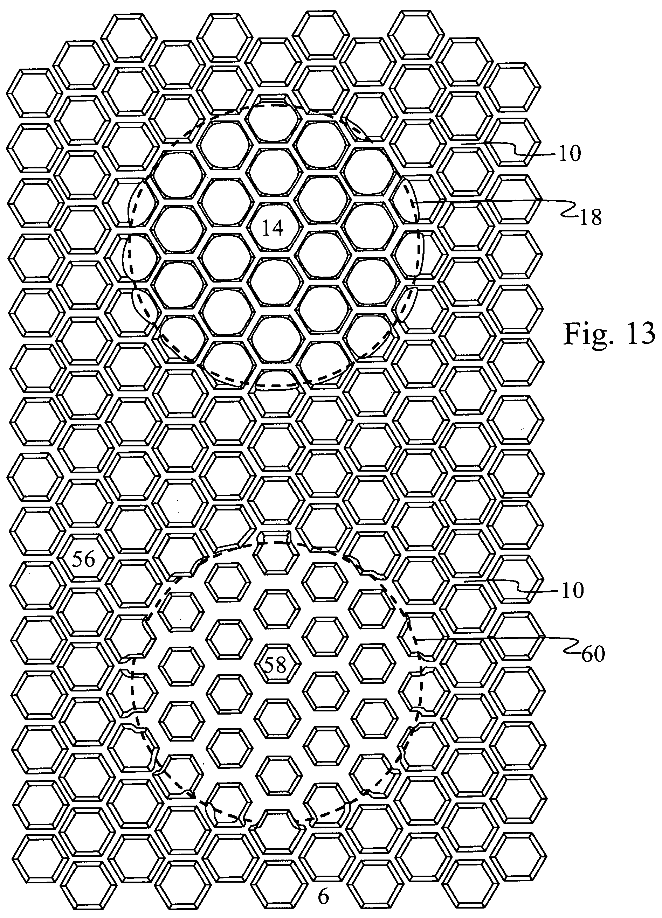

Figur 13 stellt eine Aufsicht auf einen Teilbereich des Abschirmelements dar, bei dem die Trägerlage mit dem Stanzgitter 6 verpresst ist, und bei dem das Stanzgitter 6 im Bereich 60 flachgedrückt bzw. flachgepresst ist. Der obere Bereich des Gitters ist analog zu Figur 4 flachgepresst. Die Flachgepressten Stege sind breiter und lassen weniger Raum für die Öffnungen 58 in dem flachgepressten Bereichen des Gitters 6. Wie in Figur 11 ist die Trägerlage im Bereich 18 durch einen runden Stempel mit dem Gitter 6 verpresst. In den Bereichen 14 ist das Material der Trägerlage in die Öffnungen des Gitters 6 eingedrungen und umgibt die Stege 10 zumindest teilweise formschlüssig. Damit lässt sich die Tecnhologie der Verbindung der Trägerlage mit dem Gitter mit dem Prinzip der Größenanpassung der Öffungen des Gitters 6 kombinieren.

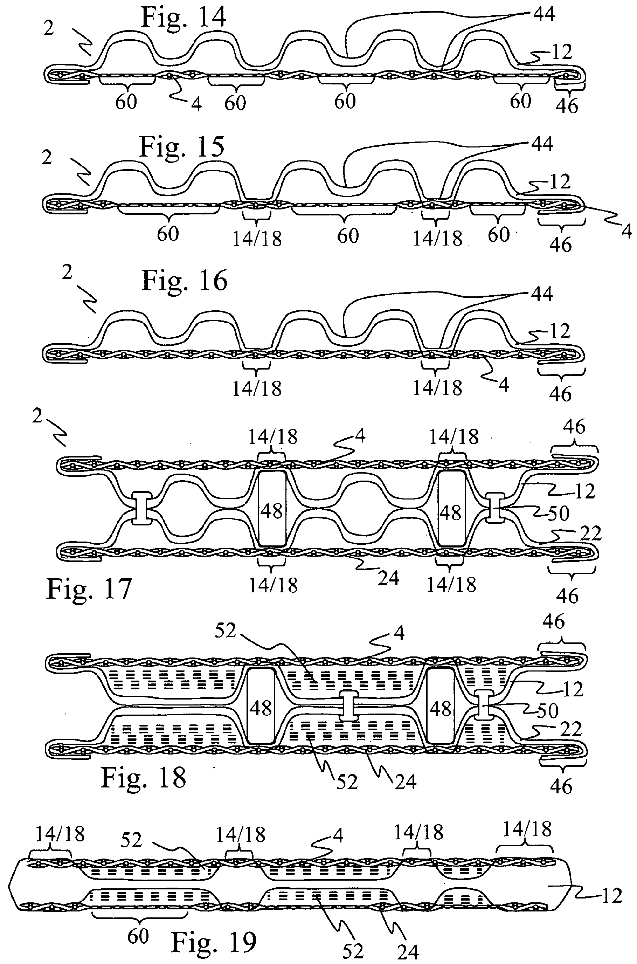

Figur 14 stellt eine Querschnittsansicht durch ein erfindungsgemäßes Abschirmelement, wie ein Akustik- und/oder Wärmeabschirmblech dar. Das Gitter 4 ist als Drahtgitter dargestellt, das am Rand durch eine Umbördelung 46 mit der Trägerlage 12 verbunden ist. Die Trägerlage 12 ist zudem mit Noppen 44 versehen, die einen definierten Abstand zu dem Gitter 4 bzw. einen definierten Hohlraum zwischen der Trägerlage 12 und dem Gitter 4 sicherstellen. Das Gitter 4 ist in den Bereichen 60 flachgepresst und die Maschenweite bzw. die Größe der Öffnungen 58 zu verringern. Dies wurde erreicht indem die Stege bzw. der Draht des Drahtgitters 4 flachgepresst wurden. Die flachgepressten Stege sind breiter und somit verbleibt weniger Platz für die Öffnungen.

Figur 15 stellt eine Querschnittsansicht durch ein erfindungsgemäßes Abschirmelement dar, wie es in Figur 14 dargestellt ist. Zusätzlich ist in den Bereichen 14/18 wie die Trägerlage 12 mit dem Gitter 4 verpresst und bildet entsprechend den Figuren 7, 8, 11, 12, und 13 eine Formschlüssige Verbindung.

Figur 16 stellt eine Querschnittsansicht durch ein erfindungsgemäßes Abschirmelement, wie ein Akustik- und/oder Wärmeabschirmblech dar. Das Gitter 4 ist als Drahtgitter dargestellt, das am Rand durch eine Umbördelung 46 mit der Trägerlage 12 verbunden ist. Die Trägerlage 12 ist zudem mit Noppen 44 versehen, die einen definierten Abstand zu dem Gitter 4 bzw. einen definierten Hohlraum zwischen der Trägerlage 12 und dem Gitter 4 sicherstellen.

Am Grund zweier Noppen 44 ist die Trägerlage mit dem Gitter 4 verpresst, sodass das Material der Trägerlage 12 in das Gitter eingedrungen ist. Das Material der Trägerlage 12 umgibt die Stege des Gitters dabei zumindest teilweise formschlüssig.

Figur 17 stellt eine Kombination zweier Abschirmbleche nach Figur 16 dar. Die Trägerlage (im Folgenden die erste Trägerlage) 12 ist mit der zweiten Trägerlage durch Nieten 50 oder clinchen verbunden. Die erste Trägerlage ist mit dem Gitter 4 (im Folgenden dem ersten Gitter 4) durch eine Randumbördelung 46 und durch Verpressen an den Stellen 14/18 verbunden.

Die zweite Trägerlage 22 ist mit dem zweiten Gitter 24 ebenfalls durch eine Randumbördelung 46 und durch Verpressen an den Stellen 14/18 verbunden.

Um ein Verpressen der relativ dünnen Trägerlagen 12/22 mit dem jeweiligen Gitter 4/24 zu ermöglichen, sind an den Verpressungsstellen 14/18 Verpressungsbegrenzer 48 zwischen den Trägerlagen angeordnet. Die Verpressungsbegrenzer 48 ermöglichen es eine definierte Gesamtdicke des Abschirmelements zu erreichen. Die Verpressungsbegrenzer 48 sind aus einem, im Vergleich zu dem Material der Trägerlagen festeren Material hergestellt. Die Verpressungsbegrenzer 48 stellen sicher, dass beim Verpressen die jeweilige Trägerlage 12, 22 mit dem jeweiligen Gitter 4, 6 verpresst wird, und nicht nur eine Dickenreduktion eintritt.

Die Ausführungsform von Figur 18 entspricht im Wesentlichen dem in Figur 17 dargestellten Abschirmblech. Im Gegensatz zu der Version von Figur 17 weisen die erste und die zweite Trägerlage 12, 22 keine Noppenstruktur auf, sondern sind nur an den Stellen mit Noppen versehen, an denen das erste oder zweite Gitter 4, 24 mit der ersten bzw. zweiten Trägerlage 12, 22 verpresst ist. Durch die fehlende Noppenstruktur kann ein Zwischenraum zwischen der ersten bzw. zweiten Trägerlage 12, 22 und dem ersten bzw. zweiten Gitter 4, 24 kann ein oder mehrere Absorberlagen 52 eingelegt sein, um eine Abschirmwirkung weiter zu erhöhen.

Figur 19 zeigt eine Ausführungsform eines Abschirmelements mit nur einer Trägerlage 12, die mit einem Höhenprofil versehen ist. Die vorstehenden Teile des Höhenprofils sind jeweils mit dem ersten bzw. zweiten Gitter 4, 24 verpresst. Durch die Verpressung ist die Trägerlage jeweils mit dem ersten und zweiten Gitter 4, 24 formschlüssig verbunden. In den dünnen Abschnitten der Trägerlage 12 kann zwischen den Gittern 4, 24 und der Trägerlage jeweils ein Dämmmaterial bzw. ein Absorber 52 eingelegt sein. Diese Konstruktion gestattet es nicht, die Ränder beider Gitter 4, 24 vollständig zu umbördeln. Es ist jedoch möglich, die Trägerlage beim Verpressen mit den Gittern so zu verformen, das keine Enden bzw. Stege 8, 10 des Gitters vorragen. Das Untere Gitter 24 ist an den Stellen 60 teilweise flachgepresst, um die Maschenweite des Gitters 24 bzw die Größe der Öffunungen in dem zweiten Gitter 24 zu verringern.

Es wird noch angemerkt, dass die als flach dargestellten Abschirmbleche in weiteren Verarbeitungsschritten zu gebogenen oder beliebigen Formen verformt werden können, wie sie im Bereich von Abschirmelementen üblich sind.

Die Dicken der Gitter und oder der Trägerlagen können zwischen 0,2 und 0,8 mm betragen. Eine Noppenstruktur kann eine Höhe zwischen 1,8 und 2,5mm aufweisen.

Die Gitter können wie dargestellt als Stanz oder Draht- bez. Flechtgitter ausgeführt sein. Es soll darauf hingewiesen werden, dass die Webart des Draht- bzw. Flechtgitters nicht auf die Leinwandbindung beschränkt, und kann beispielsweise eine Panamabindung aufweisen. Es ist ebenfalls vorgesehen, das Gitter als ein Hexagonales Geflecht auszuführen.

Es sollte darauf hingewiesen werden, dass das Drahtgitter auch aus einem ovalen oder einem im Querschnitt trapezförmigen oder sechseckigen Flachdraht gewebt sein kann. Diese Ausführungsformen wurden in den Figuren nicht dargestellt, um die Anmeldung nicht mit einer Vielzahl ähnlicher Darstellungen zu überfrachten.

Es sollte klar sein, dass die vorliegende Erfindung nicht auf die in den Figuren dargestellten Ausführungen beschränkt ist, sondern durch den in den Ansprüchen definierten Schutzumfang. Weiterhin sollen auch alle Kombinationen von Einzelmerkmalen, die einzeln in den jeweiligen Ausführungsformen offenbart sind, ebenfalls als offenbart erachtet werden.

## Patentansprüche

1. Abschirmelement, insbesondere Akustik- und oder Wärmeabschirmblech,
umfassend eine Trägerlage (12), die mit einem Gitter (4,6) verbunden ist,
wobei ein Querschnitt von Stegen (8, 10) des Gitters (4, 6) sich mindestens in einem Bereich (16) in einer Richtung, die von der Trägerlage (12) abgewandt ist, verjüngt, **dadurch gekennzeichnet, dass** die Trägerlage (12) eine geringere Festigkeit aufweist als das Gitter (4, 6),
wobei die Trägerlage (12) zumindest teilweise mit dem Gitter (4, 6) verpresst ist, sodass sich die Trägerlage (12) bis in den sich verjüngenden Bereich (16) erstreckt, wodurch die Trägerlage (12) mit dem Gitter (4, 6) formschlüssig verbunden ist.

2. Abschirmelement nach Anspruch 1, weiter umfassend ein zweites Gitter (24),
wobei ein Querschnitt von Stegen (8, 10) des zweiten Gitters (24) sich mindestens in einem Bereich in einer Richtung, die von der Trägerlage (12) abgewandt ist, verjüngt, wobei das zweite Gitter (24) eine höhere Festigkeit aufweist als die Trägerlage (12), und wobei die Trägerlage (12) zumindest teilweise mit dem zweiten Gitter (24) verpresst ist, sodass sich die Trägerlage (12) sich bis in den sich verjüngenden Bereich erstreckt, wodurch die Trägerlage (12) mit dem zweiten Gitter (24) verbunden ist.

3. Abschirmelement nach Anspruch 1, weiter umfassend eine zweite Trägerlage (22) und ein zweites Gitter (24), wobei die zweite Trägerlage (22) mit der Trägerlage (12) verbunden ist, wobei die zweite Trägerlage (22) zumindest teilweise mit dem zweiten Gitter (24) verpresst ist, sodass sich die zweite Trägerlage (24) sich bis in den sich verjüngenden Bereich erstreckt, wodurch die zweite Trägerlage (22) mit dem zweiten Gitter (24) verbunden ist.

4. Abschirmelement nach Anspruch 3, wobei zwischen der Trägerlage (12) und der zweiten Trägerlage (22) mindestens ein Verpressungsbegrenzer (48) angeordnet ist.

5. Abschirmelement nach einem der vorstehenden Ansprüche 1 bis 4, wobei das Gitter (4) und/oder das zweite Gitter (24) als ein Drahtgitter ausgebildet sind.

6. Abschirmelement nach einem der vorstehenden Ansprüche 1 bis 5, wobei das Gitter (6) und/oder das zweite Gitter (24) ein Stanzgitter ist.

7. Abschirmelement nach Anspruch 5 oder 6, wobei die Stege (8, 10) des Gitters (4, 6) einen runden, trapezförmigen, fünf-oder sechseckigen Querschnitt aufweisen.

8. Abschirmelement nach einem der vorstehenden Ansprüche 1 bis 7, wobei die Trägerlage (12) und/oder die zweite Trägerlage (22) mit Noppen (44) oder einer Noppenstruktur versehen ist.

9. Abschirmelement nach Anspruch 8, wobei die Trägerlage (12, 22) mit dem Gitter (4, 6) im Bereich der Noppen (44) oder der Noppenstruktur verpresst ist.

10. Abschirmelement nach einem der vorstehenden Ansprüche 1 bis 9, weiter umfassend mindestens eine Zwischenlage (52), die jeweils zwischen einem Gitter (4, 6) und einer Trägerlage (12, 22) angeordnet ist, und die in den Bereichen ausgespart ist, in denen die Trägerlage (12) und/oder die zweite Trägerlage (22) mit dem Gitter (4, 6) und/oder dem zweiten Gitter (24) verpresst ist.

11. Abschirmelement nach einem der vorstehenden Ansprüche 1 bis 10, wobei die Trägerlage (12) am Rand um das Gitter (4, 6) gebördelt ist und/oder die zweite Trägerlage (22) am Rand um das zweite Gitter (24) gebördelt ist.

12. Abschirmelement nach einem der vorstehenden Ansprüche 3 bis 11, wobei die Trägerlage (12) und/oder die zweite Trägerlage (22) Aluminium bzw. eine Aluminiumlegierung oder einen weichen Edelstahl umfasst.

13. Abschirmelement nach Anspruch 12, wobei die Trägerlage (12) Stahlblech umfasst, auf das Verpressungselemente aus Aluminium bzw. aus einer Aluminiumlegierung aufgebracht sind.

14. Abschirmelement nach einem der vorstehenden Ansprüche 1 bis 13, wobei das Gitter (4, 6) und/oder das zweite Gitter (24) aus vergütetem, kaltverfestigtem oder hochfestem Stahl oder Edelstahl umfasst, oder wobei die Trägerlage (12, 22) mit einem Höhenprofil versehen ist.

15. Abschirmelement nach einem der vorstehenden Ansprüche 1 bis 14, wobei mindestens in einem Bereich Stege (4, 10) des Gitters (4, 6) flachgepresst sind, wodurch die Größe der an dem Steg angrenzenden Gitteröffnungen verringert ist und oder wobei die Trägerlage (12, 50), und das Gitter (4, 6, 52) in mindestens einem Bereich beabstandet sind, wodurch mindestens ein Hohlraum gebildet ist der von der Trägerlage (12, 50), und dem Gitter (4, 6, 52) begrenzt ist.

## Claims

1. A shielding element, in particular an acoustic and/or a heat shielding plate, comprising a carrier layer (12) connected to a mesh (4, 6),
wherein a cross section of bars (8, 10) of said mesh (4,6) is tapering in at least a section (16) in a direction facing away from said carrier layer (12),
**characterized in that** said carrier layer (12) has a lower strength than said mesh (4, 6), wherein said carrier layer (12) is at least partially compressed with said mesh (4, 6), such that said carrier layer (12) extends into said tapering section (16), whereby said carrier layer (12) is positively connected to said mesh (4, 6).

2. The shielding element of claim 1, further comprising a second mesh (24),
wherein a cross section of bars (8, 10) of said second mesh (24) is tapering in at least a section in a direction facing away from said carrier layer (12),
wherein said second mesh (24) has a higher strength than said carrier layer (12),
and wherein said carrier layer (12) is at least partially compressed with said second mesh (24), such that said carrier layer (12) extends into said tapering section, whereby said carrier layer (12) is connected to said second mesh (24).

3. The shielding element of claim 1, further comprising a second carrier layer (22) and a second mesh (24), wherein said second carrier layer (22) is connected to said carrier layer (12), wherein said second carrier layer (22) is at least partially compressed with said second mesh (24), such that said second carrier layer (24) extends into said tapering section, whereby said second carrier layer (22) is connected to said second mesh (24).

4. The shielding element of claim 3, wherein at least one compression limiter (48) is disposed between said carrier layer (12) and said second carrier layer (22).

5. The shielding element of any of the preceding claims 1 to 4, wherein said mesh (4) and/or said second mesh (24) are formed as a wire mesh.

6. The shielding element of any of the preceding claims 1 to 5, wherein said mesh (6) and/or said second mesh (24) is a punched mesh.

7. The shielding element of claim 5 or 6, wherein said bars (8, 10) of said mesh (4, 6) have a round, trapezoid, pentagonal or hexagonal cross section.

8. The shielding element of any of the preceding claims 1 to 7, wherein said carrier layer (12) and/or said second carrier layer (22) is provided with nubs (44) or a nub structure.

9. The shielding element of claim 8, wherein said carrier layer (12, 22) is compressed with said mesh (4, 6) in the section of said nubs (44) or said nub structure.

10. The shielding element of any of the preceding claims 1 to 9, further comprising at least one intermediate layer (52) respectively disposed between a mesh (4, 6) and a carrier layer (12, 22) and recessed in the sections, in which said carrier layer (12) and/or said second carrier layer (22) is compressed with said mesh (4, 6) and/or said second mesh (24).

11. The shielding element of any of the preceding claims 1 to 10, wherein said carrier layer (12) is flanged around said mesh (4, 6) at the border, and/or said second carrier layer (22) is flanged around said second mesh (24) at the border.

12. The shielding element of any of the preceding claims 3 to 11, wherein said carrier layer (12) and/or said second carrier layer (22) comprises aluminium and an aluminium alloy, respectively or a soft stainless steel.

13. The shielding element of claim 12, wherein said carrier layer (12) comprises steel plate, on which compression elements from aluminium and from an aluminium alloy, respectively are applied.

14. The shielding element of any of the preceding claims 1 to 13, wherein said mesh (4, 6) and/or said second mesh (24) comprises hardened and tempered, cold worked or high strength steel or stainless steel, or wherein said carrier layer (12, 22) is provided with a height profile.

15. The shielding element of any of the preceding claims 1 to 14, wherein in at least one section bars (4, 10) of said mesh (4, 6) are flat pressed, whereby the size of the bars bordering the bar openings is lowered, and/or wherein said carrier layer (12, 50), and said mesh (4, 6, 52) are spaced in at least one section, whereby at least one cavity is formed bordered by said carrier layer (12, 50) and said mesh (4, 6, 52).

## Revendications

1. Elément d'isolation, notamment tôle d'isolation acoustique et/ou thermique, comprenant une couche porteuse (12), qui est reliée avec une grille (4, 6), dans lequel une section transversale de gradins (8, 10) de la grille (4, 6) s'amincit au moins dans une zone (16) dans une direction, qui se détourne de la couche porteuse (12), **caractérisé en ce que** la couche porteuse présente une solidité plus petite que la grille (4, 6), dans lequel la couche porteuse (12) est pressée au moins partiellement avec la grille (4, 6), de telle sorte que la couche porteuse s'étende jusqu'à à la zone s'amincissant (16), moyennant quoi la couche porteuse (12) est reliée par complémentarité de forme avec la grille (4, 6).

2. Élément d'isolation selon la revendication 1, comprenant en outre une deuxième grille (24), dans lequel une section transversale de gradins (8, 10) de la deuxième grille (24) s'amincit au moins dans une zone dans une direction, qui se détourne de la couche porteuse (12), dans lequel la deuxième grille (24) présente une plus grande solidité que la couche porteuse (12) et dans lequel la couche porteuse (12) est pressée au moins partiellement avec la deuxième grille (24), de sorte que la couche porteuse (12) s'étende jusque dans la zone s'amincissant, moyennant quoi la couche porteuse (12) est reliée avec la deuxième grille (24).

3. Élément d'isolation selon la revendication 1, comprenant en outre une deuxième couche porteuse (22) et une deuxième grille (24), moyennant quoi la deuxième couche porteuse (22) est pressée au moins partiellement avec la deuxième grille (24), de sorte que la deuxième couche porteuse (24) s'étende jusqu'à la zone s'amincissant, moyennant quoi la deuxième couche porteuse (22) est reliée avec la deuxième grille (24).

4. Élément d'isolation selon la revendication 3, dans lequel entre la couche porteuse (12) et la deuxième couche porteuse (22) au moins un limiteur de pressage est disposé.

5. Élément d'isolation selon une des revendications précédentes 1 à 4, dans lequel la grille (4) et/ou la deuxième grille (24) sont configurés comme une grille de fil métallique.

6. Élément d'isolation selon une des revendications précédentes, dans lequel la grille (6) et/ou la deuxième grille (24) est une grille découpée à l'emporte-pièce.

7. Élément d'isolation selon la revendication 5 ou 6, dans lequel les gradins (8, 10) de la grille (4, 6) présentent une forme ronde, trapézoïdale, pentagonale ou hexagonale.

8. Élément d'isolation selon une des revendications précédentes 1 à 7, dans lequel la couche porteuse (12) et/ou la deuxième couche porteuse (22) est pourvue de picots (44) ou d'une structure à picots.

9. Élément d'isolation selon la revendication 8, dans lequel la couche porteuse (12, 22) est pressée avec la grille (4, 6) au niveau des picots (44) ou de la structure à picots.

10. Élément d'isolation selon une des revendications précédentes 1 à 9, comprenant en outre au moins une couche intermédiaire (52), qui est disposée respectivement entre une grille (4, 6) et une couche porteuse (12, 22), et qui est évidée dans les zones, dans lesquelles la couche porteuse (12) et/ou la deuxième couche porteuse (22) est pressée avec la grille (4, 6) et/ou la deuxième grille (24).

11. Élément d'isolation selon une des revendications précédentes 1 à 10, dans lequel la couche porteuse (12) est sertie sur le bord autour de la grille (4, 6) et/ou la deuxième couche porteuse (22) est sertie sur le bord autour de la deuxième grille (24).

12. Élément d'isolation selon une des revendications précédentes 3 à 11, dans lequel la couche porteuse (12) et/ou la deuxième couche porteuse (22) comprend de l'aluminium respectivement un alliage d'aluminium ou un acier inoxydable tendre.

13. Élément d'isolation selon la revendication 12, dans lequel la couche porteuse (12) comprend une tôle d'acier, sur lequel des éléments de pressage en aluminium respectivement en un alliage d'aluminium sont montés.

14. Élément d'isolation selon une des revendications précédentes 1 à 13, dans lequel la grille (4, 6) et/ou la deuxième grille (24) comprend de l'acier ou de l'acier inoxydable bonifié, écroui ou à haute résistance, ou dans lequel la couche porteuse (12, 22) est pourvue d'un profilé en hauteur.

15. Élément d'isolation selon une des revendications précédentes 1 à 14, dans lequel au moins dans une zone des gradins (4, 10) de la grille (4, 6) sont pressés à plat, moyennant quoi la taille des ouvertures de grilles contiguës au gradin est diminuée et/ou dans lequel la couche porteuse (12, 50) et la grille (4, 6, 52) sont espacées dans au moins une zone, moyennant quoi au moins un espace creux est formé qui est délimité par la couche porteuse (12, 50) et la grille (4, 6, 52).
